# EUROPEAN PATENT SPECIFICATION

(11) **EP 4 313 780 B1**
(45) Date of publication and mention of the grant of the patent: **11.12.2024**
(21) Application number: 22711337.0
(22) Date of filing: 17.03.2022
(51) Int. Cl.: B65B 35/04, B65B 35/30, B65G 29/02, B65G 35/06, B65G 35/08, B65G 43/08, B65G 47/51, B65G 47/53, B65G 47/84, B65G 47/90, B65G 65/23

(54) **MACHINE FOR PACKAGING PRODUCTS OF THE TOBACCO INDUSTRY, PARTICULARLY SNUS**
MASCHINE ZUM VERPACKEN VON PRODUKTEN DER TABAKINDUSTRIE, INSBESONDERE SNUS
MACHINE D'EMBALLAGE DE PRODUITS DE L'INDUSTRIE DU TABAC, EN PARTICULIER DU SNUS

(30) Priority: 26.03.2021 IT 202100007442
(43) Date of publication of application: 07.02.2024
(73) Proprietor: Sasib S.p.A., 40013 Castel Maggiore (BO) (IT)
(72) Inventor: GHIOTTI, Roberto, 40013 Castel Maggiore (Bologna) (IT)
(74) Representative: Buzzi, Notaro & Antonielli d'Oulx S.p.A.
(86) International application number: PCT/IB2022/052437
(87) International publication number: WO 2022/200944

(56) References cited:
- EP-B1- 2 197 745
- DE-A1- 102019 126 522

## Description

### Field and object of the invention

The present invention relates to a machine for packaging products of the tobacco industry, particularly snus. Document EP 2 197 745 discloses a machine (and the corresponding operating method) for packaging products of the tobacco industry, particularly snus, comprising a feeding unit for feeding packages along a feeding direction, and a picking device for transferring the products that are positioned on the picking station into packages that advance along the feeding direction.

The solution described here has been devised for a particular application in which snus is fed to the packaging machine inside containers (also called pockets).

The object of this solution is to provide a packaging machine capable of transferring the products from the containers into packages being formed inside the machine, without adversely affecting the operating cycle of the machine.

A preferred embodiment of the solution described here relates to a machine for packaging the products in blister packs.

The aforementioned object is achieved by using a packaging machine having the characteristics specified in Claim 1.

The present invention also relates to a method according to Claim 9. The claims form an integral part of the technical teachings provided herein.

### Brief description of the drawings and detailed description of one or more embodiments of the invention

Further characteristics and advantages of the present invention will be apparent from the following description, which refers to the attached drawings provided purely by way of non-limiting example, in which:
- Figure 1 shows a preferred embodiment of the machine described here, in an axonometric view;

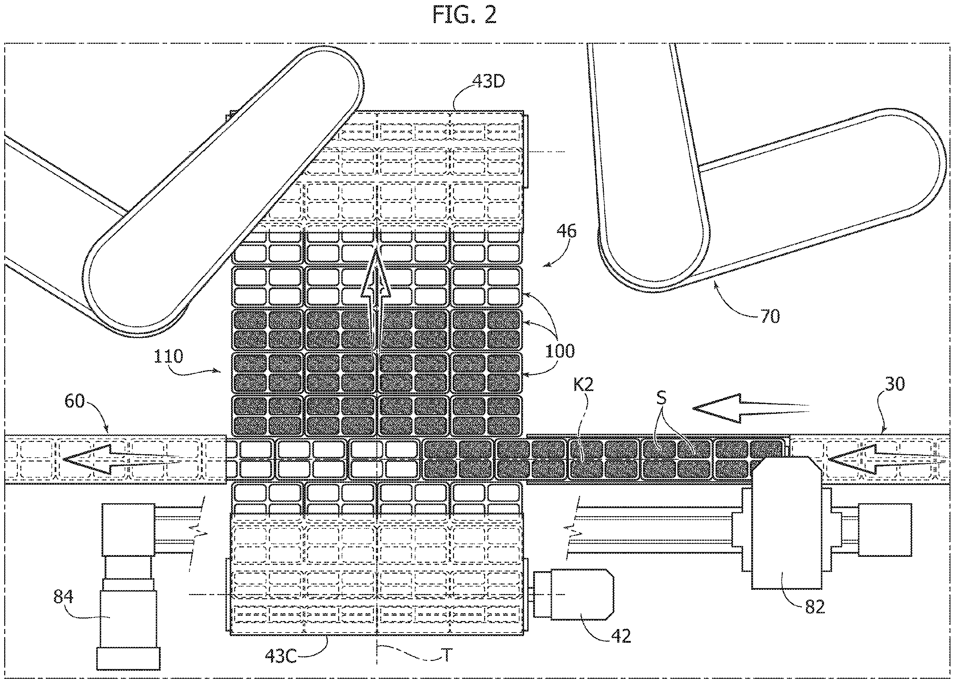

- Figure 2 shows a side view of the machine of Figure 1;
- Figure 3 shows an example of a container used in the solution described here;
- Figure 4 shows an example of packaging.

The following description illustrates various specific details intended to provide a deeper understanding of the embodiments. The embodiments may be realized without one or more of the specific details, or with other methods, components or materials, etc. In other cases, known structures, materials or operations are not shown or described in detail, to avoid obscuring various aspects of the embodiment.

The references used herein are provided purely for convenience and therefore do not define the scope of protection or the extent of the embodiments.

As mentioned above, the packaging machine described here has been devised for a particular application in which the products to be packaged are fed to the packaging machine inside containers.

Inside the containers, the products to be packaged are arranged in groups corresponding to the groups of products to be packaged in the individual packages.

The solution described here transfers the groups of products in the containers to packages or semi-finished packages formed inside said packaging machine.

In a preferred embodiment, the packaging machine described here operates to package the products in blister packs.

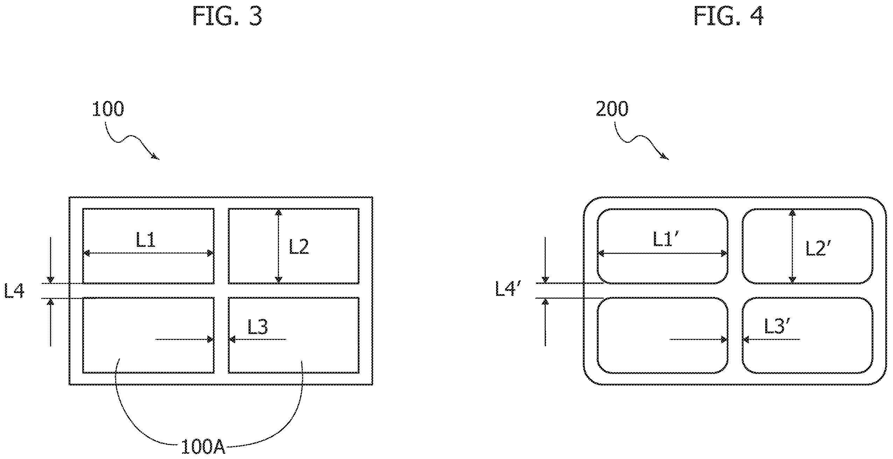

Figure 4 shows schematically an example of a blister pack - denoted as a whole by the reference numeral 200 - which has a plurality of cells 200A for receiving a corresponding number of products, each inside a respective cell.

Figure 3 shows an example of a container - indicated as a whole by the reference numeral 100 - used in the operation of the machine described here for transporting products. The container 100 comprises a plurality of compartments 100A, which reproduces the matrix of cells of the package 200.

For example, again with reference to Figures 3 and 4, each compartment 100A may have dimensions L 1, L2 that are substantially equal to the dimensions L1', L2' of the individual cell of the blister pack 200, and the distances L3, L4 between each compartment and the adjacent compartments may be substantially equal to the analogous distances L3' and L4' between the cells of the blister pack.

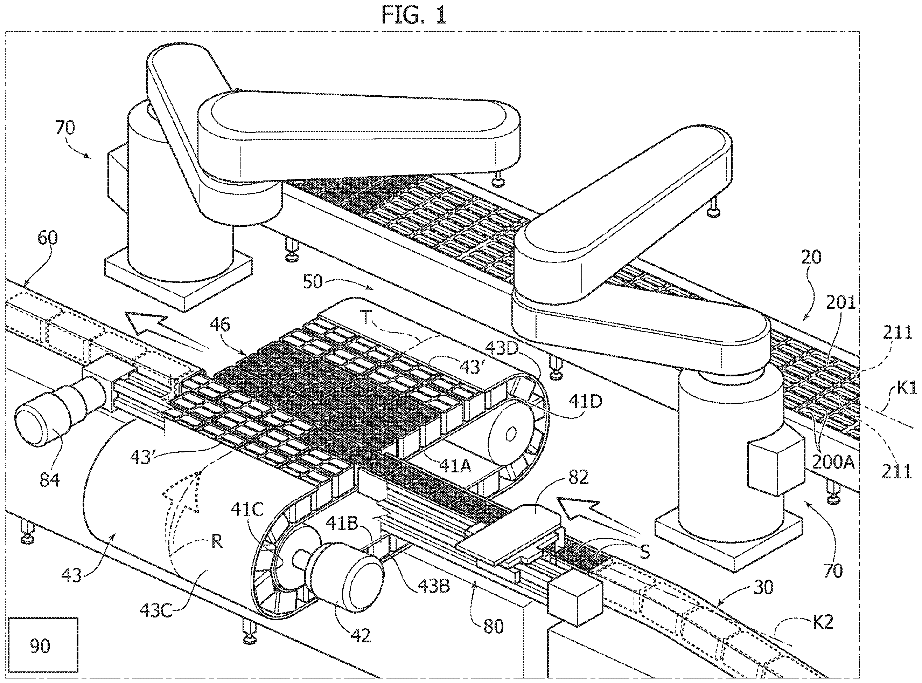

With reference to Figure 1, in general terms, the machine described here comprises:
- a feeding unit 20 for feeding the packages 200 along a feeding direction K1;
- a first conveyor 30, which is configured to move a plurality of containers 100 from a loading station (not shown), in which one or more products S are positioned in each container, to a position P1 for swapping containers;
- a second conveyor 40, which is positioned downstream of the first conveyor 30, for moving the containers 100 along a ring-like closed path R which starts and terminates at the swapping position P1, the containers 100 leaving full from the swapping position P1 and coming back empty to the swapping position P1; the second conveyor 40 conveying the containers 100 through a picking station 50 that is positioned along the ring-like closed path;
- a third conveyor 60, which is configured to move the empty containers 100 from the swapping position P1 to the exit station of the machine (not shown);
- a unit 80 for swapping containers, for transferring at least one empty container 100 that is positioned on the second conveyor 40 at the swapping position P1 on to the third conveyor 60, and simultaneously transferring at least one full container 100 that is positioned on the first conveyor 30 at the swapping position P1 on to the second conveyor 40, to take the place of the empty container 100 transferred on to the third conveyor 60;
- a picking device 70 for transferring the products S from the containers 100 that are positioned at the picking station 50 into packages 200 that advance along the feeding direction K1.

In a known manner, the packages 200 are fed, in the feeding unit 20, in the form of a band 210 that extends along the direction K1 and is moved along the same direction. On the band 210 there are formed the aforesaid cells 200A and pre-cutting lines 211 along which the band 210 will be cut subsequently to separate the individual packages 200 from the band.

In one or more preferred embodiments, such as that illustrated, the second conveyor 40 comprises a conveyor belt 41 that is movable along the ring-like path R and has an upper branch 41A, a lower branch 41B and two opposite end portions 41C, 41D which connect together the lower branch 41B and the upper branch 41A. The belt 41 is driven by an actuator 42.

The machine 10 comprises a fixed support 43 comprising a lower portion 43B and two opposite end portions 43C, 43D which extend, respectively, along the lower branch 41B and the two end portions 41C, 41D of the conveyor belt 41, and which are positioned immediately adjacent and opposed to these portions for supporting the containers 100 and keeping them on the conveyor belt 41.

The opposite edges 43' of the two end portions 43C, 43D of the fixed support 43 delimit an opening 46 lying over the upper branch 41A of the conveyor belt 41. The picking station 50 is defined in the portion of the ring-like path R at the opening 46.

The swapping position P1 is defined at the upper branch 41A of the conveyor belt 41, preferably in its portion underlying the opening 46 and near the edge 43' of the fixed support 43 that is located farther from the feeding unit 20.

In one or more preferred embodiments, such as that illustrated, the first conveyor 30 and the third conveyor 60 extend along a direction K2 substantially parallel to the direction K1, and are configured to transport the containers 100 along the same direction. In particular, the first and third conveyor 30, 60 are aligned with each other along the direction K2 at least in their portions at the swapping position P1, for the reasons that will become apparent below.

In one or more preferred embodiments, such as that illustrated, the conveyor belt 41 is, on the other hand, orientated so that its two branches 41A, 41B, upper and lower, extend along a direction T that is transverse to the directions K1, K2.

In one or more preferred embodiments, such as that illustrated, the swapping unit 80 comprises a member 82 for driving the containers 100, which is operated by an actuator 84 in an alternating movement along the direction K2.

In each forward stroke, in a direction from the first conveyor 30 to the second conveyor 60, the driving member 82 operates to transfer one or more full containers 100, located on the first conveyor 30 at the swapping position P1, on to the second conveyor 40. At the same time, by means of said full containers 100, the driving member 82 acts on the empty containers 100, located on the second conveyor 40 at the swapping position P1, to transfer them on to the third conveyor 30, so as to leave space for the full containers 100.

In one or more preferred embodiments, such as that illustrated, advantageously, the number of containers 100 that are transferred to the second conveyor 40 or to the third conveyor 60 in a single stroke of the driving member 82 is more than two, or more preferably more than three. In any case, this number of containers may evidently vary according to the requirements of specific applications.

In one or more preferred embodiments, such as that illustrated, the conveyor belt 41 is configured to make the containers 100 advance in a compact formation along the whole ring-like path R of the belt 41. The compact formation implies an arrangement of the containers 100 such that the containers transferred in each stroke of the member 82 on to the belt 41 are accumulated and grouped along the ring-like path R, each container preferably being in contact with the adjacent containers. In each position along the ring-like path R, the formation includes a number of containers 100 equal to the number of containers that are transferred by the member 82 in a single stroke.

At the opening 46, the aforesaid formation of containers 100, as a whole, defines a tray 110 characterized by a number of compartments equal to a multiple of the number of compartments of a single container 100. In particular, the tray 110 has a matrix of compartments 100A characterized by a given number of compartments along the direction T and a given number of compartments along the direction K2; the latter is equal to the number of containers that are transferred by the member 82 in a single stroke.

In one or more preferred embodiments, such as that illustrated, the picking device 70 is configured to pick the products S from the containers 100 of the tray 110 and to transfer them into the packages 200 fed by the feeding unit 20.

In one or more preferred embodiments, such as that illustrated, the packaging machine comprises a control unit 90 for controlling the actuator 42 of the conveyor belt 41 and the actuator 84 of the driving member 82.

In particular, in one or more preferred embodiments, the control unit 90 is configured to operate the conveyor belt 41 in a step movement to operate the driving member 82 during each stoppage of the conveyor belt 41 between one step and the next.

In operation, in each step of the belt 41, a new line of empty containers 100, extending along the direction K2, is brought to the swapping position P1.

Then, during the stoppage of the belt, the driving member 82 operates to replace the line of empty containers 100 with a new line of full containers 100, which are picked from the first conveyor member 30.

The full containers 100 are then fed by the belt 41 to the picking station 50, where the containers 100 jointly form the tray 110.

At this station, the picking device 70 operates to transfer the products S from the containers 100 of the tray 110 to the packages 200 fed by the feeding unit 20.

In one or more preferred embodiments, such as that illustrated, the machine 10 comprises at least two picking devices 70, which are preferably "pick-and-place" robots.

In one or more preferred embodiments, such as that illustrated, the number of containers 100 in each line along the direction K2 is equal to the number of adjacent packages 200 along a direction transverse to the feeding direction K1, in the feeding unit 20.

Preferably, the "pick-and-place" robots 70 operate in a coordinated manner, so that when one of the two robots moves to the packages 200 to transfer the products S into them, the other robot simultaneously moves to the containers 100 to pick new products S.

This mode of operation makes it possible to reduce the cycle times and also to reduce the space occupied by the picking station 50, since the two robots 70 move to the conveyor belt 41 one at a time.

In view of the above, in one or more preferred embodiments, the packaging method described here comprises the following steps:
- by means of the first conveyor 30, moving the full containers 100, coming from the station for loading the products S into the containers 100, to the swapping position P1;
- by means of the second conveyor 40, moving the containers 100, in the compact formation, along the ring-like closed path R which starts and terminates at the swapping position P1, wherein, in the moving step, the containers 100 leave full from the swapping position P1, pass through the picking station 50, and come back empty to the swapping position P1;

- by means of the third conveyor 60, moving the empty containers 100 from the swapping position P1 to the exit station of the machine;
- by means of the swapping unit 80, transferring one or more empty containers 100, located on the second conveyor 80 at the swapping position P1, on to the third conveyor 60, and simultaneously transferring one or more full containers 100, located on the first conveyor 30 at the swapping position P1, on to the second conveyor 40, to take the place of the empty containers 100 transferred to the third conveyor 60;
- by means of the picking devices 70, transferring the products S in the containers 100 located at the picking station 50 into the packages 200 that advance along a feeding direction K1.

Clearly, provided that the principle of the invention is retained, the details of construction and forms of embodiment can be varied, even to a significant degree, from what has been illustrated herein purely by way of non-limiting example, without thereby departing from the scope of the invention, as defined in the attached claims.

## Claims

1. Machine for packaging products of the tobacco industry, particularly snus, comprising:
- a feeding unit for feeding (20) packages (200) along a feeding direction (K1);
- a first conveyor (30) configured to move a plurality of containers (100) from a loading station, in which one or more products (S) are positioned into each container (100), to a position (P1) of swapping containers;
- a second conveyor (40) which is positioned downstream of the first conveyor (30) for moving the containers (100) along a ring-like closed path (R) which starts and terminates at the swapping position (P1), the containers (100) leaving full from the swapping position (P1) and coming back empty to the swapping position (P1); the second conveyor (40) conveying the containers (100) throughout a picking station (50) that is positioned along the ring-like closed path (R);
- a third conveyor configured to move the empty containers (100) from the swapping position (P 1) to the exit station of the machine;
- a unit for swapping containers for transferring at least one empty container (100) that is positioned on the second conveyor (40) at the swapping position (P1), onto the third conveyor (60), and, contemporarily, transferring at least one full container (100) that is positioned on the first conveyor (30) at the swapping position (P1), onto the second conveyor (40), to take the place of the empty container (100) transferred to the third conveyor (60);
- a picking device (70) for transferring the products (S) of the containers (100) that are positioned on the picking station (50) into packages (200) that advance along the feeding direction (K1).

2. Machine according to claim 1, wherein the second conveyor (40) is configured to make the containers (100) advance in a tray-like compact formation at least along a tract of the ring-like path (R).

3. Machine according to claim 1 or 2, wherein the second conveyor (40) comprises a conveyor belt (41) or chain having an upper branch (41A), a lower branch (41B) and two opposite end portions (41C, 41D) which connect together the lower branch (41B) and the upper branch (41A), and
wherein the machine comprises a fixed support (43) extending along at least the lower branch (41B) of the conveyor belt (41) or chain and is positioned immediately adjacent and opposed to the latter for supporting the containers (100) and keeping them on the conveyor belt (41) or chain.

4. Machine according to claim 3, wherein the fixed support (43) comprises two opposite end portions (43C, 43D) which extend along the two end portions (41C, 41D) of the conveyor belt (41) or chain and are positioned immediately adjacent and opposed to these for supporting the containers (100) and keeping them on the conveyor belt (41) or chain, and wherein
the two end portions (43C, 43D) of the fixed support (43) delimit an opening (46) lying over the upper branch (41A) of the conveyor belt (41) or chain;
the at least one picking device (70) being configured to take the products (S) from the containers (100) that are rendered accessible through this opening (46).

5. Machine according to any one of the preceding claims, comprising a control unit (90) for commanding the second conveyor (40) according to a step movement and for commanding the swapping unit (80) during each interval between one step and the next one of the step movement of the second conveyor (40).

6. Machine according to any one of the preceding claims, in which the swapping unit (80) comprises a member for drawing the containers from the first conveyor (30) to the second conveyor (40) and from the second conveyor (40) to the third conveyor (60), which is mobile according to an alternate movement, along a direction (T) that is transversal to the ring-like path (R) and goes through the swapping position (P1).

7. Machine according to any one of the preceding claims, said machine being a machine for packaging products in blisters, wherein the feeding unit (20) is configured to feed a band of semi-finished blisters on which a plurality of receptacles (200A) for receiving the products (S) are made.

8. Machine according to anyone of the preceding claims, wherein the at least one picking device (70) is a *pick-and-place* device.

9. Method for packaging products (S) of the tobacco industry, particularly snus, that are transported in containers (100) to a packaging machine, comprising the steps of:
- by means of a first conveyor (30), moving a plurality of full containers (100) coming from a station for loading the products into the containers (100), to a position (P1) for swapping containers;
- by means of a second conveyor (40) which is positioned downstream of the first conveyor (30), moving the containers (100) along a ring-like closed path (R) which starts and terminates at the swapping position (P1), wherein, in the step of moving the containers (100), they leave full from the swapping position (P1), pass through a picking station (50), and come back empty to the swapping position (P1);
- by means of a third conveyor (60), moving the empty containers (100) from the swapping position (P1) to the exit station of the machine;
- by means of a unit for swapping containers, transferring at least one empty container (100) that is positioned on the second conveyor (40) at the swapping position (P1), onto the third conveyor (60), and, contemporarily, transferring at least one full container (100) that is positioned on the first conveyor (30) at the swapping position (P1), onto the second conveyor (40), to take the place of the empty container (100) transferred to the third conveyor (60);
- by means of at least one picking device (70), transferring the products of the containers (100) that are positioned in the picking station (50) into packages (200) that advance along a feeding direction (K1).

10. Method according to claim 9, wherein on the second conveyor (40) the containers (100) advance in a tray-like compact formation at least along a tract of the ring-like path (R) of the second conveyor (40).

11. Method according to claim 9 or 10, wherein the step of transferring at least one container (100), empty or full, includes transferring a given number of containers (100) that are positioned on the first or the second conveyor (30, 40), to the second or third conveyor (40, 60); and
wherein the step of moving the containers (100) on the second conveyor (40) incudes making the containers (100) advance along the ring-like path in a compact formation which extends itself, longitudinally, along the entire ring-like path and includes, transversally, in each position along the ring-like path, a number of containers (100) equal to the given number of containers (100) transferred to the second conveyor (40) by the swapping unit (80).

12. Method according to anyone of claims 9 to 11, wherein the containers (100), each, comprise a plurality of compartments (100A), and preferably, contain a single product (S) inside each compartment (100A), and wherein
the at least one picking device (70) is a *pick-and-place* device and operates on the upper branch (41A) of the second conveyor (40) on which the containers (100) advance in a compact formation reproducing a tray (110) **characterized by** an overall number of compartments (100A) that is equal to a multiple of the number of compartments (100A) of a single container (100).

13. Method according to any one of claims 9 to 12, for packaging products in blisters, wherein the at least one picking device (70) transfers the products (S) of the containers (100) that are moved along the ring-like closed path of the second conveyor (40) into respective receptacles (200A) that are made on a band (210) of semi-finished blisters.

## Patentansprüche

1. Maschine zum Verpacken von Produkten der Tabakindustrie, insbesondere Oraltabak, umfassend:
- eine Zuführungseinheit zum Zuführen (20) von Verpackungen (200) entlang einer Zuführungsrichtung (K1) ;
- einen ersten Förderer (30), der dazu ausgelegt ist, eine Mehrzahl von Behältern (100) von einer Beschickungsstation, in der ein oder mehrere Produkte (S) in jedem Behälter (100) positioniert werden, zu einer Position (P1) zum Austauschen von Behältern zu bewegen;
- einen zweiten Förderer (40), der stromabwärts des ersten Förderers (30) zum Bewegen der Behälter (100) entlang eines ringartigen geschlossenen Pfads (R) positioniert ist, der an der Austauschposition (P1) beginnt und endet, wobei die Behälter (100) die Austauschposition (P1) voll verlassen und leer zur Austauschposition (P1) zurückkehren; wobei der zweite Förderer (40) die Behälter (100) durch eine Entnahmestation (50) befördert, die entlang des ringartigen geschlossenen Pfads (R) positioniert ist;
- einen dritten Förderer, der dazu ausgelegt ist, die leeren Behälter (100) von der Austauschposition (P1) zur Auslaufstation der Maschine zu bewegen;
- eine Einheit zum Austauschen von Behältern zum Übergeben mindestens eines leeren Behälters (100), der auf dem zweiten Förderer (40) an der Austauschposition (P1) positioniert ist, auf den dritten Förderer (60), und zeitgleichen Übergeben mindestens eines vollen Behälters (100), der auf dem ersten Förderer (30) an der Austauschposition (P1) positioniert ist, auf den zweiten Förderer (40), so dass er den Platz des an den dritten Förderer (60) übergebenen leeren Behälters (100) einnimmt;
- eine Entnahmevorrichtung (70) zum Übergeben der Produkte (S) der Behälter (100), die auf der Entnahmestation (50) positioniert sind, in Verpackungen (200), die sich entlang der Zuführungsrichtung (K1) vorschieben.

2. Maschine nach Anspruch 1, wobei der zweite Förderer (40) dazu ausgelegt ist, die Behälter (100) zu veranlassen, sich in einer schalenartigen kompakten Formation zumindest entlang eines Abschnitts des ringartigen Pfads (R) vorzuschieben.

3. Maschine nach Anspruch 1 oder 2, wobei der zweite Förderer (40) einen Fördergurt (41) oder eine Förderkette mit einem oberen Zweig (41A), einem unteren Zweig (41B) und zwei gegenüberliegenden Endabschnitten (41C, 41D), die den unteren Zweig (41B) und den oberen Zweig (41A) miteinander verbinden, umfasst, und
wobei die Maschine eine feste Stütze (43) umfasst, die sich entlang mindestens des unteren Zweigs (41B) des Fördergurts (41) oder der Förderkette erstreckt und unmittelbar angrenzend an und gegenüber zu letzterem zum Stützen der Behälter (100) und Halten derselben auf dem Fördergurt (41) oder der Förderkette positioniert ist.

4. Maschine nach Anspruch 3, wobei die feste Stütze (43) zwei gegenüberliegende Endabschnitte (43C, 43D) umfasst, die sich entlang der zwei Endabschnitte (41C, 41D) des Fördergurts (41) oder der Förderkette erstrecken und unmittelbar angrenzend an und gegenüber zu diesen zum Stützen der Behälter (100) und Halten derselben auf dem Fördergurt (41) oder der Förderkette positioniert sind, und wobei
die zwei Endabschnitte (43C, 43D) der festen Stütze (43) eine Öffnung (46) begrenzen, die über dem oberen Zweig (41A) des Fördergurts (41) oder der Förderkette liegt;
die mindestens eine Entnahmevorrichtung (70) dazu ausgelegt ist, die Produkte (S) aus den Behältern (100) zu nehmen, die durch die Öffnung (46) zugänglich gemacht werden.

5. Maschine nach einem der vorhergehenden Ansprüche, umfassend eine Steuereinheit (90) zum Befehligen des zweiten Förderers (40) gemäß einer Schrittbewegung und zum Befehligen der Austauscheinheit (80) während jedes Intervalls zwischen einem Schritt und dem nächsten der Schrittbewegung des zweiten Förderers (40).

6. Maschine nach einem der vorhergehenden Ansprüche, wobei die Austauscheinheit (80) ein Element zum Ziehen der Behälter vom ersten Förderer (30) zum zweiten Förderer (40) und vom zweiten Förderer (40) zum dritten Förderer (60) umfasst, das gemäß einer abwechselnden Bewegung entlang einer Richtung (T) beweglich ist, die quer zum ringartigen Pfad (R) ist und durch die Austauschposition (P1) verläuft.

7. Maschine nach einem der vorhergehenden Ansprüche, wobei die Maschine eine Maschine zum Verpacken von Produkten in Blistern ist, wobei die Zuführungseinheit (20) dazu ausgelegt ist, ein Band aus halbfertigen Blistern zuzuführen, auf dem eine Mehrzahl von Aufnahmen (200A) zum Aufnehmen der Produkte (S) hergestellt ist.

8. Maschine nach einem der vorhergehenden Ansprüche, wobei die mindestens eine Entnahmevorrichtung (70) eine *Pick-and-Place*-Vorrichtung ist.

9. Verfahren zum Verpacken von Produkten (S) der Tabakindustrie, insbesondere Oraltabak, die in Behältern (100) zu einer Verpackungsmaschine transportiert werden, umfassend die folgenden Schritte:
- mittels eines ersten Förderers (30), Bewegen einer Mehrzahl von vollen Behältern (100), die von einer Station zum Beschicken der Produkte in die Behälter (100) kommen, zu einer Position (P1) zum Austauschen von Behältern;
- mittels eines zweiten Förderers (40), der stromabwärts des ersten Förderers (30) positioniert ist, Bewegen der Behälter (100) entlang eines ringartigen geschlossenen Pfads (R), der an der Austauschposition (P1) beginnt und endet, wobei bei dem Schritt zum Bewegen der Behälter (100) diese voll die Austauschposition (P1) verlassen, durch eine Entnahmestation (50) passieren und leer zu der Austauschposition (P1) zurückkehren;
- mittels eines dritten Förderers (60), Bewegen der leeren Behälter (100) von der Austauschposition (P1) zur Auslaufstation der Maschine;
- mittels einer Einheit zum Austauschen von Behältern, Übergeben mindestens eines leeren Behälters (100), der auf dem zweiten Förderer (40) an der Austauschposition (P1) positioniert ist, auf den dritten Förderer (60), und zeitgleich Übergeben mindestens eines vollen Behälters (100), der auf dem ersten Förderer (30) an der Austauschposition (P1) positioniert ist, auf den zweiten Förderer (40), so dass er den Platz des an den dritten Förderer (60) übergebenen leeren Behälters (100) einnimmt;
- mittels mindestens einer Entnahmevorrichtung (70), Übergeben der Produkte der Behälter (100), die in der Entnahmestation (50) positioniert sind, in Verpackungen (200), die sich entlang einer Zuführungsrichtung (K1) vorschieben.

10. Verfahren nach Anspruch 9, wobei auf dem zweiten Förderer (40) sich die Behälter (100) in einer schalenartigen kompakten Formation zumindest entlang eines Abschnitts des ringartigen Pfads (R) des zweiten Förderers (40) vorschieben.

11. Verfahren nach Anspruch 9 oder 10, wobei der Schritt zum Übergeben mindestens eines Behälters (100), leer oder voll, Übergeben einer gegebenen Anzahl von Behältern (100), die auf dem ersten oder dem zweiten Förderer (30, 40) positioniert sind, an den zweiten oder dritten Förderer (40, 60); und
wobei der Schritt zum Bewegen der Behälter (100) auf dem zweiten Förderer (40) Veranlassen der Behälter (100), sich entlang des ringartigen Pfads in einer kompakten Formation vorzuschieben, umfasst, die sich in Längsrichtung entlang des gesamten ringartigen Pfads erstreckt und in Querrichtung in jeder Position entlang des ringartigen Pfads eine Anzahl von Behältern (100) umfasst, die gleich der gegebenen Anzahl von Behältern (100) ist, die von der Austauscheinheit (80) an den zweiten Förderer (40) übergeben wird.

12. Verfahren nach einem der Ansprüche 9 bis 11, wobei die Behälter (100) jeweils eine Mehrzahl von Fächern (100A) umfassen und vorzugsweise ein einzelnes Produkt (S) in jedem Fach (100A) enthalten, und wobei
die mindestens eine Entnahmevorrichtung (70) eine *Pick-and-Place*-Vorrichtung ist und auf dem oberen Zweig (41A) des zweiten Förderers (40) betrieben wird, auf dem sich die Behälter (100) in einer kompakten Formation vorschieben, die eine Schale (110) nachbildet, **gekennzeichnet durch** eine Gesamtanzahl von Fächern (100A), die gleich einem Vielfachen der Anzahl von Fächern (100A) eines einzelnen Behälters (100) ist.

13. Verfahren nach einem der Ansprüche 9 bis 12 zum Verpacken von Produkten in Blistern, wobei die mindestens eine Entnahmevorrichtung (70) die Produkte (S) der Behälter (100), die entlang des ringartigen geschlossenen Pfads des zweiten Förderers (40) bewegt werden, in jeweilige Aufnahmen (200A) übergibt, die auf einem Band (210) aus halbfertigen Blistern hergestellt sind.

## Revendications

1. Machine d'emballage de produits de l'industrie du tabac, en particulier du snus, comprenant :
- une unité d'alimentation pour alimenter (20) des emballages (200) le long d'une direction d'alimentation (K1) ;
- un premier transporteur (30) configuré pour déplacer une pluralité de contenants (100) depuis un poste de chargement, dans lequel un ou plusieurs produits (S) sont positionnés dans chaque contenant (100), jusqu'à une position (P1) d'échange de contenants ;
- un deuxième transporteur (40) qui est positionné en aval du premier transporteur (30) pour déplacer les contenants (100) le long d'un trajet fermé circulaire (R) qui commence et se termine au niveau de la position d'échange (P1), les contenants (100) partant pleins de la position d'échange (P1) et revenant vides à la position d'échange (P1) ; le deuxième transporteur (40) transportant les contenants (100) à travers un poste de prise (50) qui est positionné le long du trajet fermé circulaire (R) ;
- un troisième transporteur configuré pour déplacer les contenants (100) vides depuis la position d'échange (P1) jusqu'au poste de sortie de la machine ;
- une unité d'échange de contenants pour transférer au moins un contenant (100) vide qui est positionné sur le deuxième transporteur (40) au niveau de la position d'échange (P1), jusque sur le troisième transporteur (60), et, dans le même temps, transférer au moins un contenant (100) plein qui est positionné sur le premier transporteur (30) au niveau de la position d'échange (P1), jusque sur le deuxième transporteur (40), afin de prendre la place du contenant (100) vide transféré jusqu'au troisième transporteur (60) ;
- un dispositif de prise (70) pour transférer les produits (S) des récipients (100) qui sont positionnés sur le poste de prise (50) jusque dans des emballages (200) qui avancent le long de la direction d'alimentation (K1).

2. Machine selon la revendication 1, dans laquelle le deuxième transporteur (40) est configuré pour faire avancer les contenants (100) en une formation compacte de type plateau au moins le long d'une partie du trajet circulaire (R).

3. Machine selon la revendication 1 ou la revendication 2, dans laquelle le deuxième transporteur (40) comprend une bande (41) ou chaîne transporteuse ayant une branche supérieure (41A), une branche inférieure (41B) et deux portions d'extrémité opposées (41C, 41D) qui relient ensemble la branche inférieure (41B) et la branche supérieure (41A), et
la machine comprenant un support fixe (43) s'étendant le long d'au moins la branche inférieure (41B) de la bande (41) ou chaîne transporteuse et étant positionné immédiatement adjacent et opposé à cette dernière pour supporter les contenants (100) et les maintenir sur la bande (41) ou chaîne transporteuse.

4. Machine selon la revendication 3, dans laquelle le support fixe (43) comprend deux portions d'extrémité opposées (43C, 43D) qui s'étendent le long des deux portions d'extrémité (41C, 41D) de la bande (41) ou chaîne transporteuse et sont positionnées immédiatement adjacentes et opposées à celles-ci pour supporter les contenants (100) et les maintenir sur la bande (41) ou chaîne transporteuse, et dans laquelle
les deux portions d'extrémité (43C, 43D) du support fixe (43) délimitent une ouverture (46) sise au-dessus de la branche supérieure (41A) de la bande (41) ou chaîne transporteuse ;
l'au moins un dispositif de prise (70) étant configuré pour enlever les produits (S) des contenants (100) qui sont rendus accessibles par cette ouverture (46) .

5. Machine selon l'une quelconque des revendications précédentes, comprenant une unité de commande (90) pour commander le deuxième transporteur (40) selon un déplacement par étapes et pour commander l'unité d'échange (80) pendant chaque intervalle entre une étape et la suivante du déplacement par étapes du deuxième transporteur (40).

6. Machine selon l'une quelconque des revendications précédentes, dans laquelle l'unité d'échange (80) comprend un élément pour tirer les contenants depuis le premier transporteur (30) jusqu'au deuxième transporteur (40) et depuis le deuxième transporteur (40) jusqu'au troisième transporteur (60), qui est mobile selon un déplacement alterné, le long d'une direction (T) qui est transversale au trajet circulaire (R) et passe par la position d'échange (P1).

7. Machine selon l'une quelconque des revendications précédentes, ladite machine étant une machine pour emballer des produits dans des coques, dans laquelle l'unité d'alimentation (20) est configurée pour alimenter une bande de coques semi-finies sur laquelle une pluralité de réceptacles (200A) de réception des produits (S) sont réalisés.

8. Machine selon l'une quelconque des revendications précédentes, dans laquelle l'au moins un dispositif de prise (70) est un dispositif *bras-transfert.*

9. Procédé d'emballage de produits (S) de l'industrie du tabac, en particulier du snus, qui sont transportés dans des contenants (100) jusqu'à une machine d'emballage, comprenant les étapes consistant à :
- au moyen d'un premier transporteur (30), déplacer une pluralité de contenants (100) pleins provenant d'une station de chargement des produits dans les contenants (100), jusqu'à une position (P1) d'échange de contenants ;
- au moyen d'un deuxième transporteur (40) qui est positionné en aval du premier transporteur (30), déplacer les contenants (100) le long d'un trajet fermé circulaire (R) qui commence et se termine au niveau de la position d'échange (P1), dans laquelle, à l'étape consistant à déplacer les contenants (100), ils partent pleins de la position d'échange (P1), traversent un poste de prise (50), et reviennent vides à la position d'échange (P1) ;
- au moyen d'un troisième transporteur (60), déplacer les contenants (100) vides depuis la position d'échange (P1) jusqu'au poste de sortie de la machine ;
- au moyen d'une unité d'échange de contenants, transférer au moins un contenant (100) vide qui est positionné sur le deuxième convoyeur (40) au niveau de la position d'échange (P1), jusque sur le troisième convoyeur (60), et, dans le même temps, transférer au moins un contenant (100) plein qui est positionné sur le premier convoyeur (30) au niveau de la position d'échange (P1), jusque sur le deuxième convoyeur (40), afin de prendre la place du contenant (100) vide transféré jusqu'au troisième convoyeur (60) ;
- au moyen d'au moins un dispositif de prise (70), transférer les produits des récipients (100) qui sont positionnés dans le poste de prise (50) jusque dans des emballages (200) qui avancent le long d'une direction d'alimentation (K1).

10. Procédé selon la revendication 9, dans lequel sur le deuxième transporteur (40) les contenants (100) avancent en une formation compacte de type plateau au moins le long d'une partie du trajet circulaire (R) du deuxième transporteur (40).

11. Procédé selon la revendication 9 ou la revendication 10, dans lequel l'étape consistant à transférer au moins un contenant (100), vide ou plein, inclut le transfert d'un nombre donné de contenants (100) qui sont positionnés sur le premier ou le deuxième transporteur (30, 40), jusqu'au deuxième ou troisième transporteur (40, 60) ; et
dans lequel l'étape consistant à déplacer les contenants (100) sur le deuxième transporteur (40) inclut le fait de faire avancer les contenants (100) le long du trajet circulaire en une formation compacte qui s'étend elle-même, longitudinalement, le long du trajet circulaire tout entier et inclut, transversalement, à chaque position le long du trajet circulaire, un nombre de contenants (100) égal au nombre donné de contenants (100) transférés jusqu'au deuxième transporteur (40) par l'unité d'échange (80).

12. Procédé selon l'une quelconque des revendications 9 à 11, dans lequel les contenants (100), chacun, comprennent une pluralité de compartiments (100A), et de préférence, contiennent un seul produit (S) à l'intérieur de chaque compartiment (100A), et dans lequel
l'au moins un dispositif de prise (70) est un dispositif *bras-transfert* et fonctionne sur la branche supérieure (41A) du deuxième transporteur (40) sur lequel les contenants (100) avancent en une formation compacte reproduisant un plateau (110) **caractérisé par** un nombre total de compartiments (100A) qui est égal à un multiple du nombre de compartiments (100A) d'un seul contenant (100).

13. Procédé selon l'une quelconque des revendications 9 à 12, pour emballer des produits dans des coques, dans lequel l'au moins un dispositif de prise (70) transfère les produits (S) des contenants (100) qui sont déplacés le long du trajet fermé circulaire du deuxième transporteur (40) jusque dans des réceptacles respectifs (200A) qui sont réalisés sur une bande (210) de coques semi-finies.
